# EUROPEAN PATENT APPLICATION

(11) **EP 1 729 520 A2**
(43) Date of publication of application: **06.12.2006**
(21) Application number: 05257917.4
(22) Date of filing: 20.12.2005
(51) Int. Cl.: H04N 7/34

(54) **Apparatus and method for image encoding and decoding with non square macroblocks**

(30) Priority: 30.05.2005 KR 2005045611
(71) Applicant: Samsung Electronics Co., Ltd., Suwon-si, Gyeonggi-Do (KR)
(72) Inventor: Lee, Sang-rae, Suwon-si Gyeonggi-do (KR); Kim, So-Young, Yongsin-si, Gyeonggi-do (KR); Park, Jeong-hoon, Gwanak-gu, Seoul (KR); Sohn, Yu-mi, Seongnam-si, Gyeonggi-do (KR)
(74) Representative: Brandon, Paul Laurence

(57) **Abstract**

Provided is an apparatus and method for video encoding and decoding, in which video encoding and decoding are performed using blocks of a predetermined shape that increases the number of adjacent blocks that can be used for intraprediction. A video encoder includes a picture division unit (101) and an encoding unit. The picture division unit divides a picture to be encoded into blocks of the predetermined shape that allows at least three adjacent blocks to be used in intraprediction. The encoding unit performs encoding in a predetermined scanning order that allows at least three adjacent blocks to be used in intraprediction of the divided blocks.

## Description

The present invention relates to apparatus and methods for image encoding and decoding.

Well known video compression standards such as moving picture expert group (MPEG)-1, MPEG-2, MPEG-4 Visual, H.261, H.263, and H.264 use an M×N rectangular blocks as units of coding.

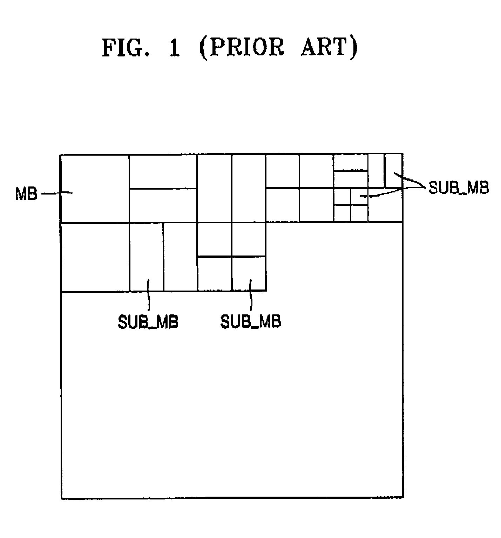

FIG. 1 is a reference diagram illustrating blocks used as units of reference picture determination and motion compensation thereof in the conventional H.264 video compression standard.

As illustrated in FIG. 1, according to the conventional H.264 video compression standard, coding or decoding is performed in units of 16×16 macroblocks, a plurality of which are included in a picture, or in units of sub-blocks obtained by dividing a macroblock into 2 or 4 subblocks. Encoding and decoding are performed based on prediction. Such encoding using M×N blocks not only requires simple motion compensation that is easy to compute but also is suitable for image transformation based on rectangular video frames and blocks, such as discrete cosine transform (DCT), and provides a model that is effective for various types of video images.

However, pixel data to be encoded in a video frame docs not necessarily coincide with a square sub-block or macroblock. In other words, an actual object rarely coincides with a square boundary and a moving object may be located between pixels instead of in a certain pixel position between frames. Moreover, in case of various kinds of object movement, e.g., transformation, rotation, twisting, and dense fog, coding efficiency is not sufficiently high when using square block-based coding.

Preferred embodiments of the present invention aim to provide an apparatus and a method for image encoding and decoding, in which adjacent pixels or blocks of a reference picture are efficiently used by using blocks of predetermined shapes that increases the number of adjacent blocks that can be used in intraprediction, instead of by using conventional square block-based coding.

Preferred embodiments of the present invention also aim to provide an apparatus and a method for image encoding and decoding, in which subjective image quality is improved based on human visual characteristics.

According to an aspect of the present invention, there is provided an image encoder comprising a picture division unit dividing a picture to be encoded into a plurality of blocks, each block comprising a predetermined shape that allows at least three adjacent blocks to be used in intraprediction; and an encoding unit performing encoding in a predetermined scanning order that allows at least three adjacent blocks to be used in intraprediction of the divided blocks.

The picture division unit may include an extrapolation unit and a division unit. The extrapolation unit expands the picture in order that the picture is matched with the plurality of blocks. The division unit divides the expanded picture into the plurality of blocks.

The extrapolation unit may expand the picture by extrapolating pixels around the border of the picture.

The encoding unit may include a prediction unit, a transformation unit, a quantization unit, and an entropy-encoding unit. The prediction, unit performs at least one of intraprediction and interprediction in units of the divided blocks. The transformation unit transforms a difference between data predicted by the prediction unit and the picture. The quantization unit quantizes data transformed by the transformation unit. The entropy-encoding unit creates a bitstream by compressing data quantized by the quantizing unit.

The predetermined shape may be a hexagon.

The predetermined scanning may be performed in at least one of horizontal and vertical directions.

According to another aspect of the present invention, there is provided a method for image encoding, the method comprising dividing a picture to be encoded into a plurality of blocks, each block comprising a predetermined shape that allows at least three adjacent blocks to be used in intraprediction; performing at least one of intraprediction and interprediction in a predetermined scanning order that allows at least three adjacent blocks to be used in intraprediction of the divided blocks; and calculating a difference between a result of at least one of the intraprediction and interprediction and the picture and encoding a residue resulting from the calculation.

The predetermined shape may be a hexagon.

The predetermined scanning is performed in at least one of horizontal and vertical directions.

The method may further include expanding the picture in order that the picture is matched with the plurality of blocks.

The expansion of the picture may be performed by extrapolating pixels around the border of the picture.

According to still another aspect of the present invention, there is provided an image decoder comprising an entropy decoder, extracting at least one of texture information and motion information from a bitstream that is encoded in units of blocks, each block comprising a predetermined shape that allows at least three adjacent blocks to be used in intraprediction; an inverse quantization unit inversely quantizing the texture information; an inverse transformation unit reconstructing a residue from the inversely quantized texture information; a reference picture extrapolation unit expanding a reference picture used for motion compensation; a motion compensation unit predicting a block of a predetermined shape to be decoded from the expanded reference picture using the motion information; and an intraprediction unit predicting a block of a predetermined shape to be decoded from pixels of decoded adjacent blocks.

The predetermined shape may be a hexagon.

The texture information may include pixel values of at least one of an intracoded block of a predetermined shape and a motion-compensated error of an intercoded block of a predetermined shape.

The motion information may include motion vector information and reference picture information.

According to yet another aspect of the present invention, there is provided a method for image decoding, the method comprising extracting texture information and motion information from a compressed bitstream, reconstructing a residue by inversely quantizing and inversely transforming the texture information, performing at least one of ioterprediction and intraprediction on a block of a predetermined shape, which is encoded such that at least three adjacent blocks are used in intraprediction, and reconstructing a picture by adding the residue and the block which has been output from at least one of the interprediction and the intraprediction.

The predetermined shape may be a hexagon.

The method may include expanding a reference picture for the interprediction of the block of the predetermined shape.

The expansion of the reference picture may be performed by extrapolating pixels around the border of a picture.

Further features of the present invention are set out in the appended claims. The present invention will become more apparent by describing in detail exemplary embodiments thereof with reference to the attached drawings in which:
FIG. 1 is a reference diagram illustrating blocks used as units of reference picture determination and motion compensation thereof in the conventional H.264 video compression standard;
FIG. 2 is a block diagram of a video encoder according to an exemplary embodiment of the present invention;
FIG. 3 illustrates an example in which a picture to be encoded is divided using hexagonal macroblocks in a video encoder according to an exemplary embodiment of the present invention;
FIG. 4 illustrates examples of a hexagonal macroblock and a sub-block;
FIG. 5 is a detailed block diagram of a picture division unit according to an exemplary embodiment of the present invention;
FIG. 6 is a view for explaining a process of expanding an input picture in an extrapolation unit of a video encoder according to an exemplary embodiment of the present invention;
FIG. 7 is a view for explaining a process of dividing an extrapolated picture with the picture division unit of a video encoder according to an exemplary embodiment of the present invention;
FIG. 8 is a view for explaining a motion estimation process performed by a motion estimation unit of a video encoder according to an exemplary embodiment of the present invention;
FIGS. 9A and 9C illustrate examples of the encoding order of a block divided into hexagonal macroblocks in a video encoder according to an exemplary embodiment of the present invention;
FIG. 10 is a view for explaining an intrapredietion process performed by an intraprediction unit of a video encoder according to an exemplary embodiment of the present invention;
FIG. 11 illustrates another example of a macroblock that is available in a video encoder according to an exemplary embodiment of the present invention;
FIG. 12 is a view for explaining division of a picture using macroblocks as illustrated in FIG. 11;
FIG. 13 is a flowchart illustrating a method for video encoding according to another exemplary embodiment of the present invention;
FIG. 14 is a block diagram of a video decoder according to an exemplary embodiment of the present invention;
FIG. 15 is a flowchart illustrating a method for video decoding according to another exemplary embodiment of the present invention; and
FIG. 16 is a view for comparing display efficiencies of an exemplary embodiment of the present invention and a prior art with respect to a display device having a specific shape.

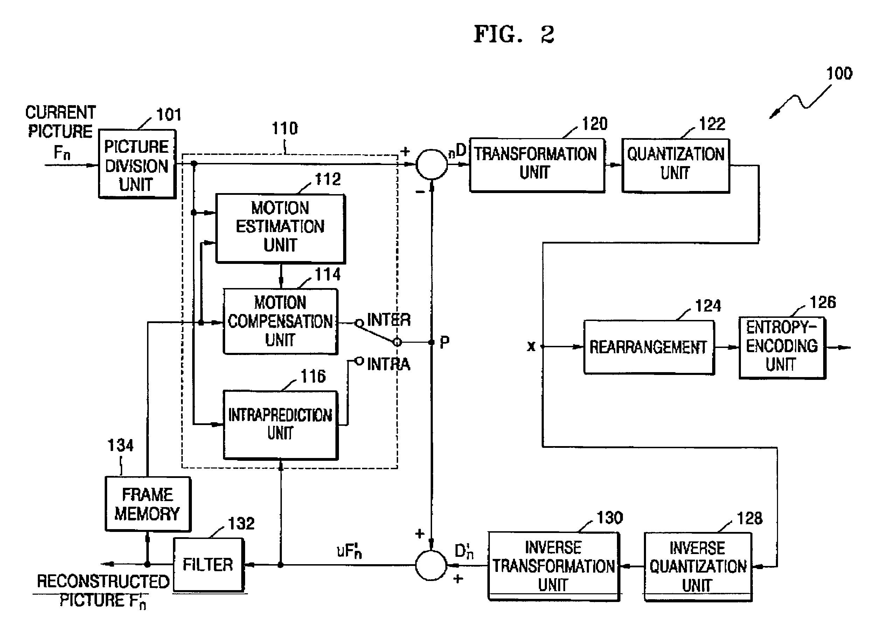

FIG. 2 is a block diagram of a video encoder according to an exemplary embodiment of the present invention.

The video encoder according to an exemplary embodiment of the present invention divides an input picture into blocks of a predetermined shape that allows at least three adjacent blocks to be used for intraprediction, instead of conventional macroblocks, and performs encoding in a predetermined scanning order that allows at least three adjacent blocks to be used in intraprediction of each of the divided blocks. In the following description, a focus will be placed on a case where a hexagonal block based on human visual characteristics is used as a block of the predetermined shape. However, it can be easily understood that the predetermined shape may be another polygon aside from a hexagon.

Referring to FIG. 2, a video encoder 100 includes a picture division unit 101, a temporal/spatial prediction unit 110, a transformation unit 120, a quantization unit 122, a rearrangement unit 124, an entropy-encoding unit 126, an inverse-quantization unit 128, an inverse-transformation unit 130, a filter 132, and a frame memory 134.

The picture division unit 101 divides an input current picture Fn into blocks of a predetermined shape. Here, a block used as the unit of encoding in the video encoder 100 takes the predetermined shape that allows at least three adjacent blocks to be used for intraprediction. For example, the picture division unit 101 may use a hexagonal macroblock as the unit of encoding, instead of a conventional square or rectangular block.

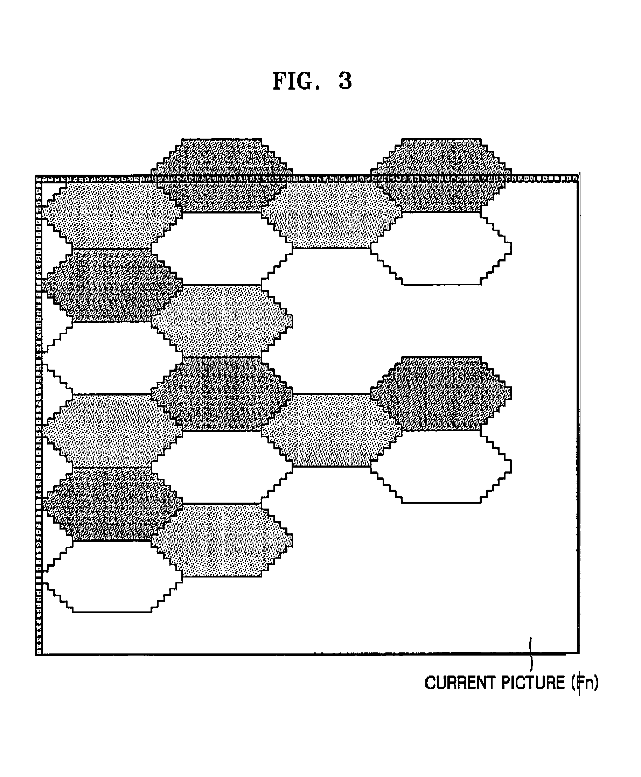

FIG. 3 illustrates an example in which the current picture Fn to be encoded is divided into hexagonal macroblocks in the video encoder 100.

Referring to FIG. 3, the picture division unit 101 divides the current picture Fn into a plurality of hexagonal macroblocks. Here, a hexagonal macroblock is the unit of encoding in the video encoder 100. A hexagon is known to be more suitable for human visual characteristics than a square. Thus, by using a hexagonal block, it is possible not only to reduce a visual blocking effect but also to increase the number of adjacent blocks used in intraprediction compared to a conventional square block. The hexagonal macroblocks may be predicted from previously encoded data. In other words, like block-based coding in conventional video compression standards, intra macroblocks among hexagonal macroblocks used in the present invention are predicted from samples that have already been encoded, decoded, and reconstructed and samples in inter macroblocks among the hexagonal macroblocks are predicted from previously encoded samples.

Prediction data of a current hexagonal macroblock to be encoded is extracted from the current hexagonal macroblock, and a residue resulting from the extraction is compressed and transmitted to a video decoder.

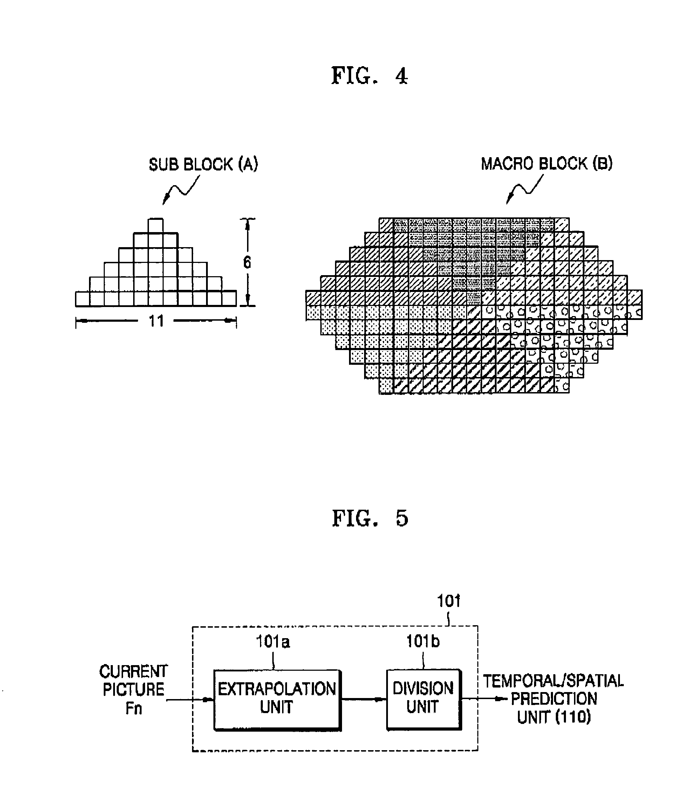

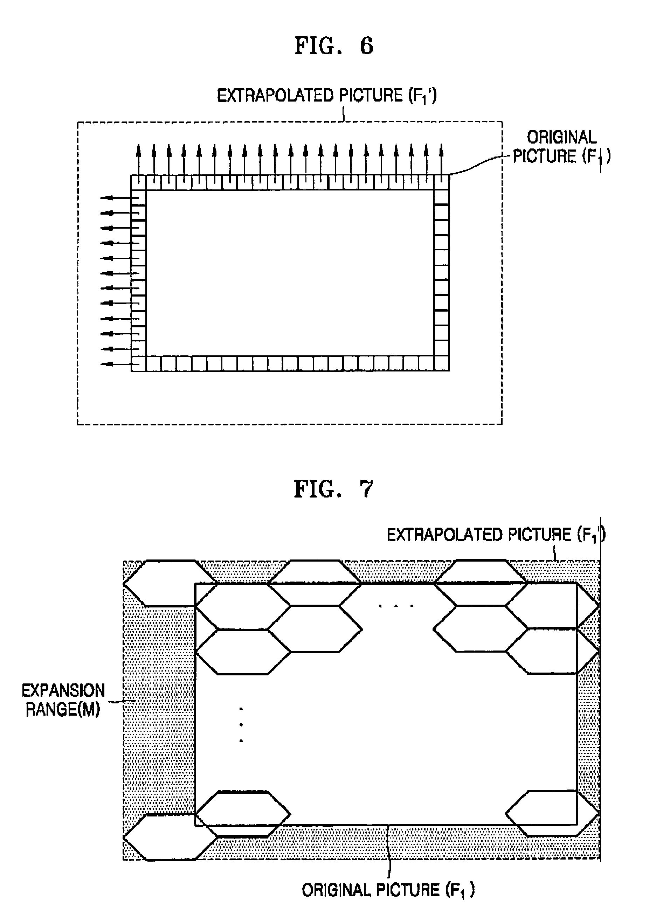

FIG. 4 illustrates examples of a hexagonal macroblock and a sub-block. As illustrated in FIG. 4, 6 triangular sub-blocks A constitute one macroblock B, in which each sub-block A has a base width of 11 pixels and a height of 6 pixels. Like the tree structured motion compensation in the conventional H.264 standard where a 16x16 macroblock is divided into sub-blocks of a predetermined size, and motion compensation and prediction are performed, the video encoder 100 according to this embodiment of the present invention may divide the hexagonal macroblock B into the triangular sub-blocks A and perform motion compensation and prediction. The hexagonal macroblocks and sub-blocks according to embodiments of the present invention may be configured variously, without being limited to those illustrated in FIG. 4.

FIG. 5 is a detailed block diagram of the picture division unit 101 according to an exemplary embodiment of the present invention.

Referring to FIG. 5, the picture division unit 101 includes an extrapolation unit 101a and a division unit 101b.

The extrapolation unit 101a expands an input picture to the extent that the input picture can be divided into blocks of a predetermined size, thus creating an extrapolated picture. The division unit 101b divides the extrapolated input picture into hexagonal macroblocks. In general, since a picture to be encoded is in a rectangular shape, it is not divided into an integral number of hexagonal macroblocks. As a result, in order that all pixels of the input picture are included in hexagonal macroblocks, it is necessary to expand the input picture. Hereinafter, extrapolation performed by the extrapolation unit 101a and division performed by the division unit 101b will be described in detail with reference to FIGS. 6 and 7.

FIG. 6 is a view for explaining a process of expanding the input picture in the extrapolation unit 101a, and FIG. 7 is a view for explaining a process of dividing the extrapolated picture in the picture division unit 101b.

The extrapolation unit 101a determines how much an original picture F₁ to be encoded is to be expanded, based on the size and shape of hexagonal macroblocks into which the picture F₁ is divided. If the hexagonal macroblocks are used without the original picture F₁ being expanded, pixels around the border of the original picture F₁ may not be included in any of the hexagonal macroblocks. For this reason, the extrapolation unit 101 a determines an expansion range M of the original picture F₁ as indicated by a shaded area of FIG. 7 so that pixels around the border of the original picture F₁ are included in the hexagonal macroblocks.

After determining the expansion range M of the original picture F₁, the extrapolation unit 101a creates an extrapolated picture F₁' by horizontally or vertically extrapolating the pixels around the border of the original picture F₁.

The division unit 101b divides the extrapolated picture F₁' so that all pixels of the original picture F₁ are included in the hexagonal macroblocks. Referring back to FIG. 2, the video encoder 100 performs encoding in units of the hexagonal macroblocks obtained from the picture division unit 101.

More specifically, the temporal/spatial prediction unit 110 of the video encoder 100 performs temporal/spatial prediction in a manner that is similar to a method used for a conventional video compression standard. In other words, the temporal/spatial prediction unit 110 performs temporal prediction in which prediction of a current frame is performed by referring to at least one of past and future frames using a similarity between adjacent pictures and spatial prediction in which spatial redundancy is removed using a similarity between adjacent samples.

The video encoder 100 encodes a hexagonal macroblock of a current picture using an encoding mode selected from a plurality of encoding modes. To this end, rate-distortion (RD) costs are calculated by performing encoding using all the possible modes of interprediction and intraprediction. As a result, a mode having the smallest RD cost is selected as the optimal encoding mode, and encoding is performed using the selected optimal encoding mode.

For interprediction, the motion estimation unit 112 searches in a reference picture for a prediction value of a hexagonal macroblock of the current picture.

If the motion estimation unit 112 finds a reference block in units of a 1/2 pixel or a 1/4 pixel, the motion compensation unit 114 calculates an intermediate pixel and determines data of the reference block. As such, interprediction is performed by the motion estimation unit 112 and the motion compensation unit 114.

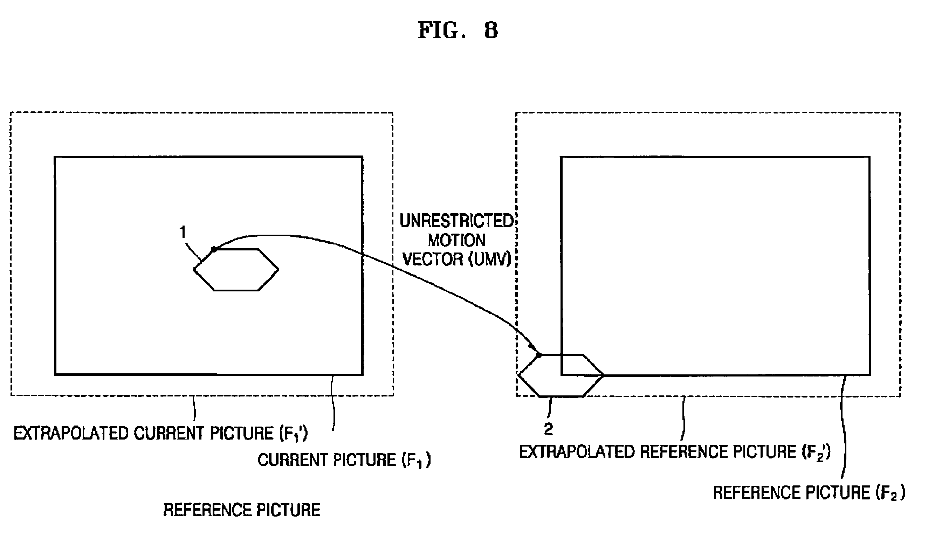

FIG. 8 is a view for explaining a motion estimation process performed by the motion estimation unit 112 of the video encoder 100 according to an exemplary embodiment of the present invention.

Referring to FIG. 8, when the motion estimation unit 112 searches in a reference picture F₂ for a reference block that is matched with a hexagonal macroblock 1 to be encoded, a hexagonal macroblock 2 in an extrapolated reference picture F₂' outside the border of the reference picture F₂ may be best matched with the hexagonal macroblock 1. Thus, the motion estimation unit 112 allows the outside of the border of the reference picture F₂ to be indicated using an unrestricted motion vector (UMV) used in MPEG-4 Visual. The UMV can improve motion compensation efficiency when an object to be encoded moves into or out of a frame.

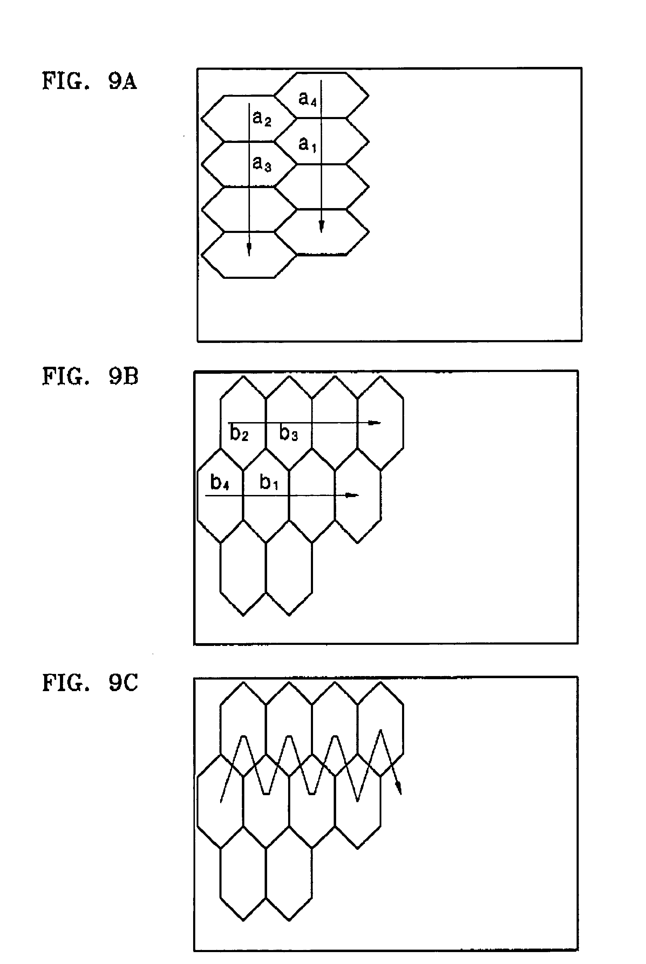

FIGS. 9A, 9B, and 9C illustrate examples of the encoding order of a block divided into hexagonal macroblocks in the video encoder 100 according to the present invention. The hexagonal macroblocks are encoded vertically in FIG. 9A, arc encoded horizontally in FIG. 9B, and encoded in a zigzag direction in FIG. 9C.

Referring to FIG. 9A, when intraprediction is performed on a hexagonal macroblock a1 in the order that left column pixels of the hexagonal macroblock a₁ are first intrapredicted vertically, three adjacent hexagonal macroblocks a₂, a₃, and a₄, which have already been encoded, can be used. Thus, when compared to a conventional processing order in which intraprediction is performed on a conventional rectangular block using pixel information of adjacent blocks located above and on the left side of a current block, more adjacent blocks can be used and encoding can be performed efficiently using a correlation between adjacent blocks.

Similarly, referring to FIG. 9B, when intraprediction is performed on a hexagonal macroblock b1 in the order that top row pixels of the hexagonal macroblock b1 are first intrapredicted horizontally, three adjacent hexagonal macroblocks b2, b3, and b4, which have already been encoded, can be used.

As illustrated in FIG. 9C, when intraprediction is performed in a zigzag direction, the number of adjacent pixels that are available for intraprediction is reduced when, compared to FIGS. 9A and 9B, but is increased when compared to processing using a conventional rectangular macroblock.

Referring back to FIG. 2, the intraprediction unit 116 performs intraprediction by searching for a prediction value of a hexagonal macroblock of a current picture.

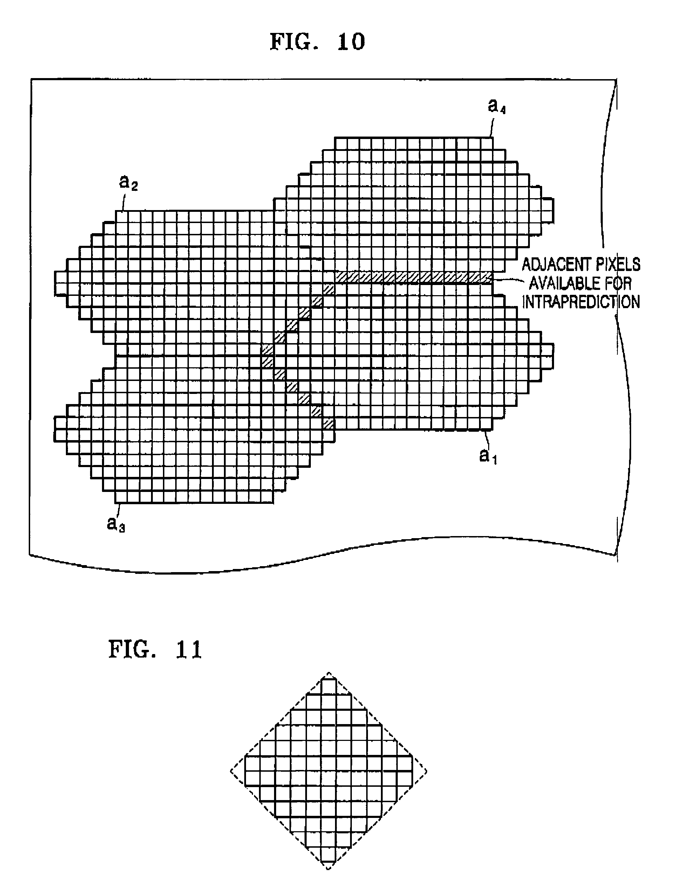

FIG. 10 is a view for explaining an intraprediction process performed by the intraprediction unit 116 of the video encoder 100 according to an embodiment of the present invention.

Referring to FIG. 10, pixels in a hexagonal macroblock al to be encoded are predicted using dashed pixels of adjacent blocks. Like intraprediction in H.264, the intraprediction unit 116 can perform intraprediction using the pixels of the adjacent blocks under various modes.

To determine an optimal encoding mode for a current hexagonal macroblock, RD costs are calculated in all the possible encoding modes. A mode having the smallest RD cost is determined as an encoding mode for the current macroblock, and encoding is performed on the current macroblock using the determined encoding mode.

Once prediction data to be used by the current hexagonal macroblock is found through interprediction or intraprediction, it is extracted from the current hexagonal macroblock and is transformed in the transformation unit 120 and then quantized in the quantization unit 122. To reduce the amount of data in encoding, a residue resulting from the extraction of a motion estimated reference block from the current hexagonal macroblock is encoded. The quantized residue passes through the rearrangement unit 124 to be entropy encoded by the entropy-encoding unit 126. To obtain a reference picture to be used for interprediction, a quantized picture passes through the inverse quantization unit 128 and the inverse transformation unit 130, and thus a current picture is reconstructed. After passing through the filter 132, the reconstructed current picture is stored in the frame memory 134 and is used later for interpredietion of a subsequent picture.

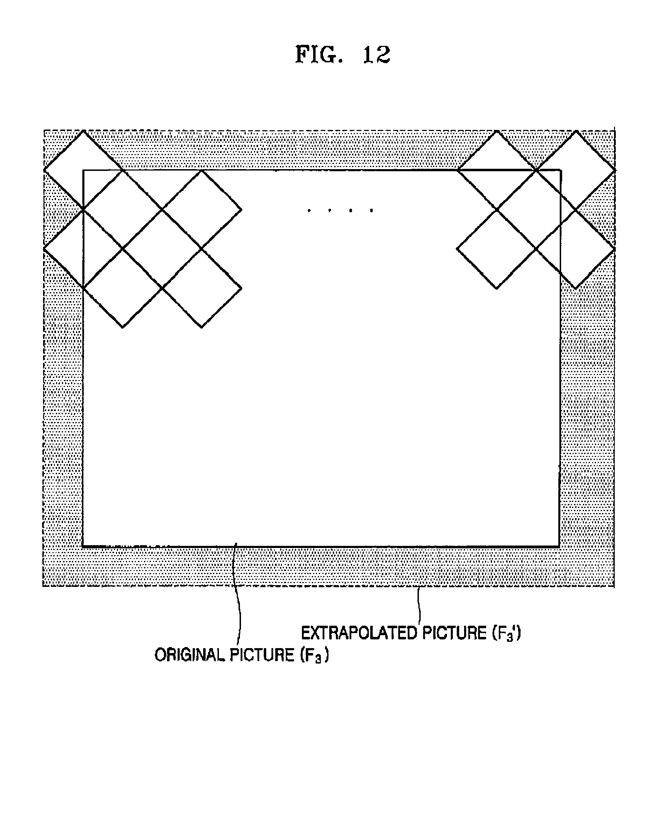

FIG. 11 illustrates another example of a macroblock that is available in the video encoder 100 according to an exemplary embodiment of the present invention, and FIG. 12 is a view for explaining division of a picture using macroblocks as illustrated in FIG. 11.

Referring to FIG. 11, a diamond-shaped macroblock formed by joining two of the sub-blocks illustrated in FIG. 4 together may be used as the unit of encoding/decoding. The diamond-shaped macroblock is similar to the hexagonal macroblock in terms of visual perception and can be encoded using a conventional macroblock processing device through simple coordinate transformation. As illustrated in FIG. 12, an original picture F₃ to be encoded is divided using diamond-shaped macroblocks that are encoded in a manner that is similar to hexagonal macroblocks. When using the diamond-shaped macroblocks, encoding is performed using an extrapolated picture F₃' so that pixels around the border of the original picture F₃ are included in the diamond-shaped macroblocks. The diamond macroblocks according to the present invention may be configured in different ways, without being limited to those illustrated in FIG. 11.

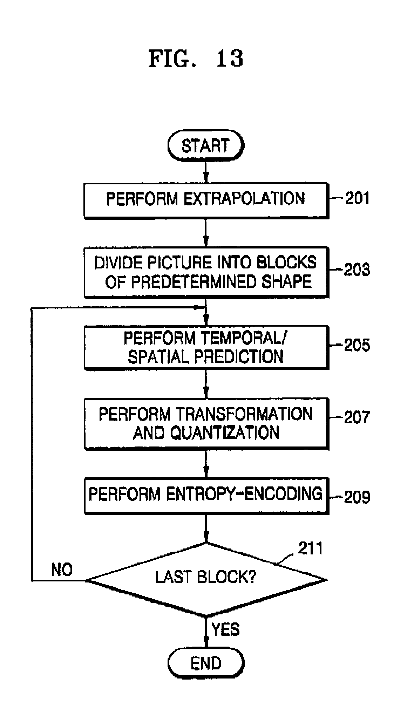

FIG. 13 is a flowchart illustrating a method for video encoding according to another exemplary embodiment of the present invention.

Referring to FIG. 13, in operation 201, it is determined how much a current picture to be encoded is to be expanded based on a predetermined size and shape of macroblocks, and the current picture is expanded so that all pixels in the current picture are included in macroblocks of the predetermined shape. As mentioned above, the expansion of the current picture is performed by horizontally or vertically extrapolating pixels around the border of an original picture.

In operation 203, the extrapolated picture is divided into macroblocks of the predetermined shape, e,g., hexagonal macroblocks.

Next, encoding is performed in units of the macrobloclcs in operation 205. In other words, temporal prediction in which prediction of a current frame is performed by using at least one of past and future frames using a similarity between adjacent pictures and spatial prediction in which spatial redundancy is removed using a similarity between adjacent samples are performed.

In operation 207, once prediction data to be used by the current hexagonal macroblock is found through interprediction or intraprediction, it is extracted from a current hexagonal macroblock and is transformed and then quantized. As is well known in the art, the transformation may be performed using a discrete cosine transform (DCT) algorithm.

In operation 209, transformed and quantized data is entropy-encoded into a compressed bitstream. Entropy-encoding may be performed using a variable length coding or arithmetic coding algorithm.

In operation 211, the above-mentioned encoding process is repeated until processing of the last block of the current picture is completed.

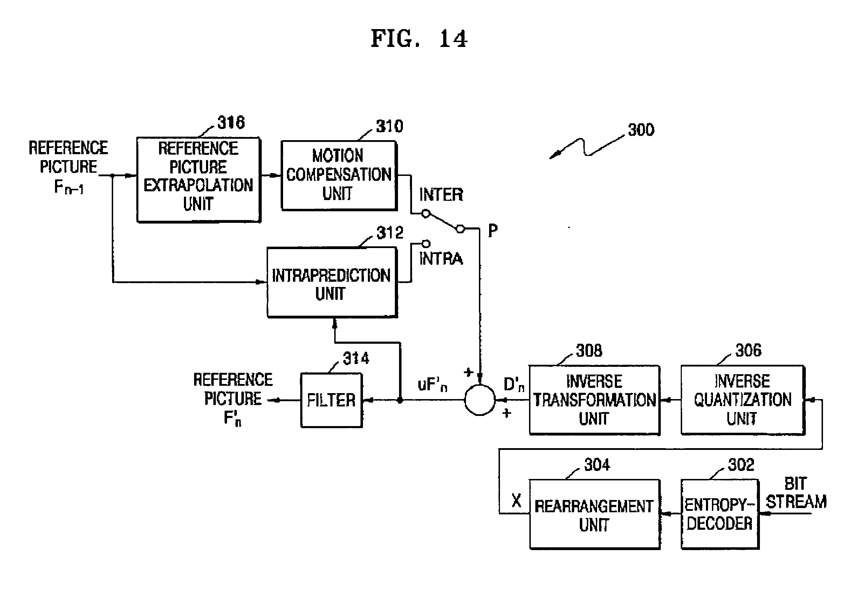

FIG. 14 is a block diagram of a video decoder according to an embodiment of the present invention.

Referring to FIG. 14, a video decoder 300 includes an entropy decoder 302, a rearrangement unit 304, an inverse quantization unit 306, an inverse transformation unit 308, a motion compensation unit 310, an intraprediction unit 312, a filter 314, and a reference picture extrapolation unit 316. The entropy decoder 302 and the rearrangement unit 304 receive and entropy-decode a compressed bitstream to generate a quantized coefficient X. The inverse quantization unit 306 and the inverse transformation unit 308 perform inverse quantization and inverse transformation on the quantized coefficient X to extract transformation encoding coefficients, i.e., motion vector information and header information. The motion compensation unit 310 and the intraprediction unit 312 generate a prediction block using decoded header information according to an encoded picture type. An error value D'ₙ is added to the prediction block to generate uF'ₙ. In other words, the motion compensation unit 310 performs interprediction in which a hexagonal macroblock is predicted from an extrapolated reference picture using motion information and the intraprediction unit 312 predicts a hexagonal macroblock from pixels of adjacent blocks in the extrapolated reference picture. uF'ₙ passca through the filter 314, thereby generating a reconstructed picture F'ₙ. As such, the video decoder 300 reconstructs a picture using macroblocks of the predetermined shape, e.g., hexagonal macroblocks.

The motion compensation unit 310 extracts a reference hexagonal macroblock from a reference picture according to a motion vector. A motion vector may be outside the border of the reference picture. Thus, the reference picture extrapolation unit 316 expands the reference picture by extrapolating pixels around the border of the reference picture, thereby allowing the use of a UMV outside the border of the reference picture.

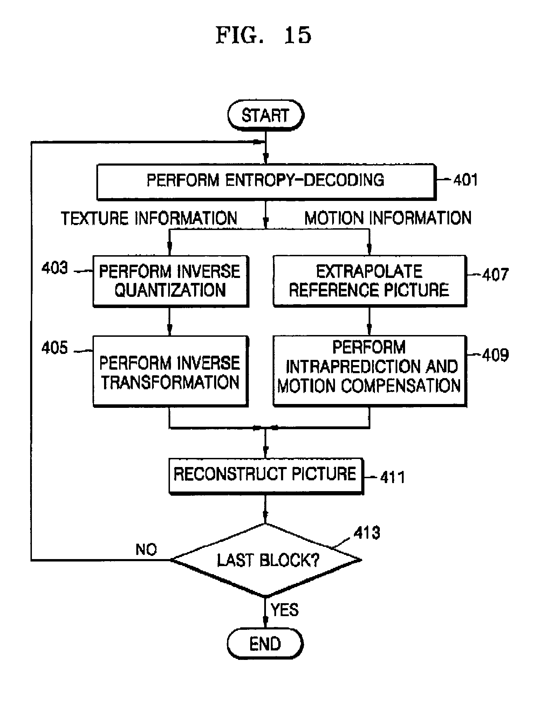

FIG. 15 is a flowchart illustrating a method for video decoding according to another exemplary embodiment of the present invention.

Referring to FIG. 15, the entropy decoder 302 extracts texture information and motion information from a compressed bitstream in operation 441. In the current exemplary embodiment of the present invention, the texture information is represented by a pixel value of an intracoded hexagonal macroblock or a motion-compensated error of an intercoded hexagonal macroblock.

The texture information is inversely quantized in operation 403 and is inversely transformed in operation 405 to reconstruct a residue.

The motion information extracted from the compressed bitstream undergoes motion compensation. Here, the unit of decoding used for motion compensation is a block of a predetermined shape, e.g., a hexagonal macroblock. Since a search area for a motion vector needs to be expanded based on a UMV for motion compensation, the border of the reference picture is extrapolated using pixels around the border in operation 407.

In operation 409, intraprediction and motion compensation (interprediction) arc performed using the extracted motion information, e.g., motion vector information and reference picture information, to form a motion compensation predicted hexagonal macroblock that is the same as in the video encoder 100. In operation 411, a picture is reconstructed by adding the residue obtained in operation 405 and the prediction value of the hexagonal macroblock obtained in operation 409. Here, the reconstructed picture is stored in a memory to be used as a reference picture for a subsequent picture.

In operation 413, the above-mentioned decoding process is repeated until decoding of the last hexagonal macroblock of the picture is completed.

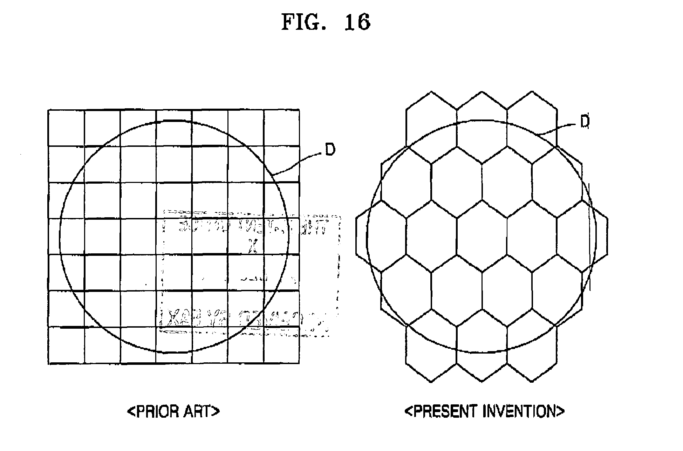

FIG. 16 is a view for comparing display efficiencies of preferred embodiments of the present invention and prior art with respect to a display device having a specific shape.

Referring to FIG. 16, when a display device D for displaying a reconstructed picture has a shape other than a conventionally used square, through picture processing using hexagonal macroblocks according to embodiments of the present invention, it is not necessary to encode non-displayed areas unlike conventional picture processing using square macroblocks. Similarly, by using the method for video encoding and decoding according to the present invention, an object of a picture, which is not in a square shape, can be more efficiently coded than when using conventional macroblocks.

As described above, according to an exemplary embodiment of the present invention, adjacent pixels or blocks of a reference picture are more efficiently used than coding using conventional macroblocks.

In addition, according to an exemplary embodiment of the present invention, subjective video quality is improved through encoding using hexagonal macroblocks based on human visual characteristics.

The present invention can also be embodied as computer-readable code on a computer-readable recording medium. The computer-readable recording medium is any data storage device that can store data which can be thereafter read by a computer system. Examples of computer-readable recording media include read-only memory (ROM), random-access memory (RAM), CD-ROMs, magnetic tapes, floppy disks, optical data storage devices, and carrier waves. The computer-readable recording medium can also be distributed over a network of coupled computer systems so that the computer-readable code is stored and executed in a decentralized fashion.

While the present invention has been particularly shown and described with reference to exemplary embodiments thereof, it will be understood by those of ordinary akill in the art that various changes in form and details may be made therein without departing from the spirit and scope of the present invention as defined by the following claims. For example, the present invention may further apply to encoding and decoding of a still image, video and a combination of a still image and video.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image encoder comprising:
a picture division unit (101) dividing a picture to be encoded into a plurality of blocks, each block comprising a predetermined shape that allows at least three adjacent blocks to be used in intraprediction; and
an encoding unit performing encoding in a predetermined scanning order that allows at least three adjacent blocks to be used in intraprediction of the divided blocks.

2. The image encoder of claim 1, wherein the picture division unit (101) comprises:
an extrapolation unit (101a) expanding the picture in order that the picture is matched with the plurality of blocks; and
a division unit (101b) dividing the expanded picture into the plurality of blocks.

3. The image encoder of claim 2, wherein the extrapolation unit (101a) expands the picture by extrapolating pixels around the border of the picture.

4. The image encoder of any preceding claim, wherein the encoding unit comprises:
a prediction unit (110) performing at least one of intraprediction and interprediction in units of the divided blocks;
a transformation unit (120) transforming a difference between data predicted by the prediction unit and the picture;
a quantization unit (122) quantizing data transformed by the transformation unit; and
an entropy-encoding unit (126) creating a bitstream by compressing data quantized by the quantization unit.

5. The image encoder of any preceding claim, wherein the predetermined shape is a hexagon.

6. The image encoder of any preceding claim, wherein the predetermined scanning may be performed in at least one of horizontal and vertical directions.

7. A method for image encoding, the method comprising:
dividing a picture to be encoded into a plurality of blocks, each block comprising a predetermined shape that allows at least three adjacent blocks to be used in intraprediction;
performing at least one of intraprediction and interprediction in a predetermined scanning order that allows at least three adjacent blocks to be used in intraprediction of the plurality of blocks; and
calculating a difference between a result of at least of the intraprediction and interprediction and the picture and encoding a residue resulting from the calculation.

8. The method of claim 7, wherein the predetermined shape is a hexagon.

9. The method of claim 7 or claim 8, wherein the predetermined scanning is performed in at least one of horizontal and vertical directions.

10. The method of any one of claims 7-9, further comprising expanding the picture in order that the picture is matched with the plurality of blocks.

11. The method of claim 10, wherein the expansion of the picture is performed by extrapolating pixels around the border of the picture.

12. An image decoder comprising:
an entropy decoder (302) extracting at least one of texture information and motion information from a bitstream that is encoded in units of blocks, each block comprising a predetermined shape that allows at least three adjacent blocks to be used in intraprediction;
an inverse quantization unit (306) inversely quantizing the texture information;
an inverse transformation unit (308) reconstructing a residue from the inversely quantized texture information;
a reference picture extrapolation unit (316) expanding a reference picture used for motion compensation;
a motion compensation unit (310) predicting a block of a predetermined shape to be decoded from the expanded reference picture using the motion information; and
an intraprediction unit (312) predicting a block of a predetermined shape to be decoded from pixels of decoded adjacent blocks.

13. The image decoder of claim 12, wherein the predetermined shape is a hexagon.

14. The image decoder of claim 12 or claim 13, wherein the texture information comprises at least one of a pixel value of an intracoded block of a predetermined shape and a motion-compensated error of an intercoded block of a predetermined shape.

15. The image decoder of any one of claims 12-14, wherein the motion information comprises motion vector information and reference picture information.

16. A method for image decoding, the method comprising:
extracting texture information and motion information from a compressed bitstream;
reconstructing a residue by inversely quantizing and inversely transforming the texture information;
performing at least one of interprediction and intraprediction on a block of a predetermined shape, which is encoded such that at least three adjacent blocks are used in intraprediction; and
reconstructing a picture by adding the residue and the block which has been output from at least one of the interprediction and the intraprediction.

17. The method of claim 16, wherein the predetermined shape is a hexagon.

18. The method of claim 16 or claim 17, further comprising expanding a reference picture for the interprediction of the block of the predetermined shape.

19. The method of claim 18, wherein the expansion of the reference picture is performed by extrapolating pixels around the border of a picture.
